# EUROPEAN PATENT SPECIFICATION

(11) **EP 3 750 765 B1**
(45) Date of publication and mention of the grant of the patent: **06.11.2024**
(21) Application number: 19180294.1
(22) Date of filing: 14.06.2019
(51) Int. Cl.: B60W 60/00

(54) **METHOD, APPARATUS AND COMPUTER PROGRAM FOR GENERATING A CONTROL SIGNAL FOR OPERATING A VEHICLE**
VERFAHREN, VORRICHTUNG UND COMPUTERPROGRAMM ZUR ERZEUGUNG EINES STEUERSIGNALS ZUM BETRIEB EINES FAHRZEUGS
PROCÉDÉ, APPAREIL ET PROGRAMME INFORMATIQUE DE GÉNÉRATION D'UN SIGNAL DE COMMANDE POUR LE FONCTIONNEMENT D'UN VÉHICULE

(43) Date of publication of application: 16.12.2020
(73) Proprietor: Bayerische Motoren Werke Aktiengesellschaft, 80809 München (DE)
(72) Inventor: Notz, Dominik, Belmont 94002 (US); Sung, George, San Jose 95131 (US)

(56) References cited:
- EP-A1- 3 339 126
- EP-A1- 3 495 220
- DE-A1- 102014 208 311
- US-A1- 2018 113 461
- US-A1- 2019 072 959

## Description

### Field

The invention relates to a method, a computer program and an apparatus for operating a vehicle.

### Background

Computer models, such as machine-learning models, of driving behavior can be used in fields of automotive development. In the field of autonomous driving, for example, computer models can play an important role. For example, autonomously driving vehicles can be trained and tested by using computer models in order to eliminate errors before testing the autonomous driving systems under real conditions in traffic. For testing autonomous driving systems, it may be advantageous to develop computer models, which can reproduce a realistic driving behavior of vehicles.

In many cases, machine learning is used in cross-fleet applications, meaning that algorithms improve driving decisions by analyzing gathered data. These general improvements are then applied to fleets of vehicles, with each vehicle that is a part of the fleet benefitting from this machine learning process. While this is a great way to improve the automated driving performance of all vehicles, user preferences are not considered by applying the improvements to the whole fleet. As a result, the user may feel uncomfortable with the automated system's style of driving, and may be inclined to interfere with the automated driving, which may lead to situations in which the driver takes over without having a complete overview of the driving situations.

Patent US2012215415A1 describes a system capable of automated driving where the acceleration process is adapted depending on the driver. In patent DE102011100277A1, the parameters of driver assistance systems, such as the proximity control system, high-beam assistant and/or lane guidance are improved and personalized using machine learning. Patent US2017369073 relates to various systems, apparatuses and methods to provide an adaptable system that learns driving performance and/or behavior from the driver to learn a driver profile. Adapted parameters include fuel consumption and gear shift level. The prior disclosures fail to include parameters that are crucial to raise the driver's comfort. If the driver feels uncomfortable with the driving decisions the autonomous vehicles makes, he is more likely to interfere, which may lead to situations in which the driver is taking over the helm without fully being aware of the traffic that surrounds his vehicle.

US patent application US 2019/0072959 A1 relates to unsupervised learning agents for autonomous driving applications. In said application, an unsupervised training approach for the training of machine-learning models is presented. To enable such unsupervised training, an adversarial training process is being used to train a machine-learning model that is used to interpret sensor data of a vehicle, in order to create a generator module that is trained to provide an interpretation of the environment that comes as close as possible to the actual environmental state. The output of the generator module is then used as input of an inverse reinforcement learning process, which is used to derive a reward map based on samples of human expert driving behavior. The reward map is, in turn, incorporated into a trained autonomous driving agent, which is used to conduct a car. The autonomous driving agent implements a policy of driving actions, as exhibited by the expert human driver, through the use of the reward map.

There may be a desire to provide an improved approach for operation a vehicle which provides an increased safety of the operation.

### Summary

The above desire is addressed with a method comprising the features of claim 1, a computer program comprising the features of claim 15 and an apparatus comprising the features of claim 16.

The present invention is based on the finding, that, in order to make the driving feel more tailored to the driver, thus reducing instances in which the driver might want to interfere, a machine-learning model may be adapted to imitate the driver's driving style, enabling the vehicle, in autonomous mode, to drive similar to the driver. This can be achieved by using an imitation learning-based training of the machine-learning model. The invention thus relates to a personalization of driving policy. The invention provides an application of machine learning in the field of user behavior in automated driving

Embodiments of the present invention use imitation learning techniques to learn a personalized driving policy. Imitation learning (e.g. inverse reinforcement learning followed by reinforcement learning or generative adversarial imitation learning) may be applied to personalize driving policies to the user. Imitation learning is the approach of training a policy to make decisions using demonstrations. This type of machine learning may be used when a reward function is difficult to specify or when the reward function is sparse and difficult to optimize directly. For example, if a combination of inverse reinforcement leaning and reinforcement learning is used, driver demonstrations of a human driver may be used to perform inverse reinforcement learning, which may yield a target/reward function that is used for the subsequent reinforcement learning.

In this particular application, the driver may serve as the demonstrator while he uses the car in manual driving mode. The various perception sensors on the car may provide a model of the environment to the imitation learning algorithm. With those two components, driving decisions can be personalized to the driver using imitation learning. The driving style then may feel trimmed to the user and may be continuously adjusted, as the imitation learning improves the system's decision making process every time the driver drives the car. Thus, the system may also be capable of adapting to a change in policy of the same driver over time. An example for such a situation would be a man who is an active driver with high accelerations and many lane changes. If this man then becomes a father he may change his style of driving to make the passengers feel safer. Such changes over time in individual drivers may be reflected in the driving policy as well.

Parameters which may be modified in order to reflect a passenger's style of driving may include, but are not limited to a following distance, a lane changing profile, an acceleration profile and/or a deceleration profile, a jerk (as a derivative of acceleration), a position within a lane (center or shifted to left or right), a velocity in curves, and parameters related to wait or drive decisions (e.g. on a narrow street).

These parameters may be adjusted by the imitation learning algorithm in order to imitate the driver's decisions. As one car often has multiple users, different means can be used to differentiate between drivers. These means may include, but are not limited to a profile created by car, key fobs and/or cell phones (which will also be used to grant entry to cars in future vehicles)

The invention is thus aimed at making driving an automated vehicle a more comfortable experience for each individual driver (due to the personalized driving policy in which the automated system imitates the driver), thereby avoiding interference by the driver and thus improving a safety of the driving experience. In the more comfortable driving experience, the policy of the automated system may be continuously adjusted. The automated system feels trimmed to individual driver, providing an increased feeling of safety, as the automated system drives as its driver would.

For example, the machine-learning model may be generated using a simulation of the vehicle in a vehicular environment. The imitation learning approach may be aimed at decreasing a difference between the driving behavior of the driver and a simulated driving behavior of the vehicle. The difference between the driving behavior of the driver and the simulated driving behavior of the vehicle may be used as measure of similarity between the driving behavior of the driver and the simulated driving behavior of the vehicle.

The simulation of the vehicle in the vehicular environment may be based on one or more simulated input parameters related to the vehicular environment of the vehicle. The one or more simulated input parameters may reflect a driving situation the vehicle is in. By simulating the vehicular environment, the machine-learning model may learn a way to operate the vehicle in the vehicular environment.

For example, the one or more simulated input parameters may comprise simulated sensor data of perception sensors of the vehicle. This may enable a usage of the machine-learning model on a low level, which may provide a better focus on the specifics of the vehicle, while likely requiring a longer training phase.

Alternatively or additionally, the one or more simulated input parameters may comprise one or more elements of simulated positional data of the vehicle and of one or more further vehicles surrounding the vehicle, simulated velocity data of the vehicle and of one or more further vehicles surrounding the vehicle, and static mapping data of features of the environment of the vehicle. This may enable a usage of the machine-learning model on a high level, so that a pre-trained machine-learning model may be used that focuses on the low-level functionality, while still being able to influence the relevant driving policy features that make the driving of the vehicle feel natural.

In some embodiments, the machine-learning model is generated using reinforcement learning. By using reinforcement learning, the machine-learning model may be generated without requiring the static rules that are used in a rule-based model.

In at least some embodiments, the target function is a reward function of the reinforcement learning-based generation of the machine-learning model. The transforming of the information about the driving behavior of the driver of the vehicle into the target function for the machine-learning model may comprise using inverse reinforcement learning based on the driving behavior of the driver to determine the reward function. Inverse reinforcement learning followed by reinforcement learning is an imitation learning-based approach.

For example, the reinforcement learning may be based on a simulation of the vehicle in a vehicular environment. The reward function may be based on a difference between the driving behavior of the driver and a simulated driving behavior of the vehicle. For example, difference between the driving behavior of the driver and the simulated driving behavior of the vehicle may be used to judge the performance of the simulated driving behavior.

Alternatively, the machine-learning model is generated using a generative adversarial imitation learning-based approach. Generative adversarial imitation learning is another imitation learning-based approach.

For example, the machine-learning model may be generated using a simulation of the vehicle in a vehicular environment using a generator component and a discriminator component. The generator component may generate a plurality of variants of a driving behavior of the vehicle. The discriminator component may evaluate the plurality of variants of the driving behavior of the vehicle based on the driving behavior of the driver. A simulator-discriminator approach may be used to implement the imitation learning-based approach.

The machine-learning model used by the method, apparatus and computer program for generating a control signal for a vehicle is generated based on a pre-trained machine-learning model. The pre-trained machine-learning model is a driver-agnostic machine-learning model. This may enable a generic pre-training of the machine-learning model, enabling a re-use of the pre-trained model for different drivers.

An amount of change relative to the pre-trained machine-learning model may be limited in the generation of the machine-learning model. This may avoid situations, in which the vehicle behaves unpredictably towards other drivers.

For example, the pre-trained machine-learning model may be a machine-learning model that is trained using reinforcement learning using a further reward function. The machine-learning model may be generated using reinforcement learning using a combination of the target function and of the further reward function as reward function. This may limit a change relative to the pre-trained model.

For example, the information about the driving behavior of the driver of the vehicle comprises information on one or more elements of the group of a following distance of the driver, a lane changing behavior of the driver, a preferred position of the driver within a lane, a desired velocity of the driver within bends, a behavior of the driver in wait or drive situations, an overtaking behavior of the driver, a steering behavior of the driver, an acceleration behavior of the driver and a deceleration behavior of the driver. The pre-trained machine-learning model may be adjusted in the generation of the machine-learning model to imitate one or more elements of the group of the following distance of the driver, the lane changing behavior of the driver, the preferred position of the driver within a lane, the desired velocity of the driver within bends, the behavior of the driver in wait or drive situations, the overtaking behavior of the driver, the steering behavior of the driver, the acceleration behavior of the driver and the deceleration behavior of the driver. These parameters may cover the main aspects of the driver-specific driving style of the driver.

In some embodiments, the machine-learning model is one of a plurality of driver-specific machine-learning models. The method may comprise selecting the machine-learning model based an identity of a driver using the vehicle. This may enable the use of driver-specific models for any driver of a shared vehicle.

The method may comprise determining the identity of the driver using the vehicle using one or more elements of the group of a selection of a profile by the driver, a detection of a personal key fob of the driver and a detection of a cell phone of the driver. This may enable distinguishing the various drivers of the vehicle.

### Brief description of the Figures

Some examples of apparatuses and/or methods will be described in the following by way of example only, and with reference to the accompanying figures, in which
- Fig. 1: shows a flow chart of an embodiment of a method for generating a machine-learning model;
- Fig. 2a: shows a flow chart of an embodiment of a method for generating a control signal for operating a vehicle; and
- Fig. 2b: shows a block diagram of an embodiment of an apparatus for generating a control signal for operating a vehicle.

### Detailed Description

Various examples will now be described more fully with reference to the accompanying drawings in which some examples are illustrated. In the figures, the thicknesses of lines, layers and/or regions may be exaggerated for clarity.

Accordingly, while further examples are capable of various modifications and alternative forms, some particular examples thereof are shown in the figures and will subsequently be described in detail. However, this detailed description does not limit further examples to the particular forms described. Further examples may cover all modifications, equivalents, and alternatives falling within the scope of the disclosure. Same or like numbers refer to like or similar elements throughout the description of the figures, which may be implemented identically or in modified form when compared to one another while providing for the same or a similar functionality.

Unless otherwise defined, all terms (including technical and scientific terms) are used herein in their ordinary meaning of the art to which the examples belong.

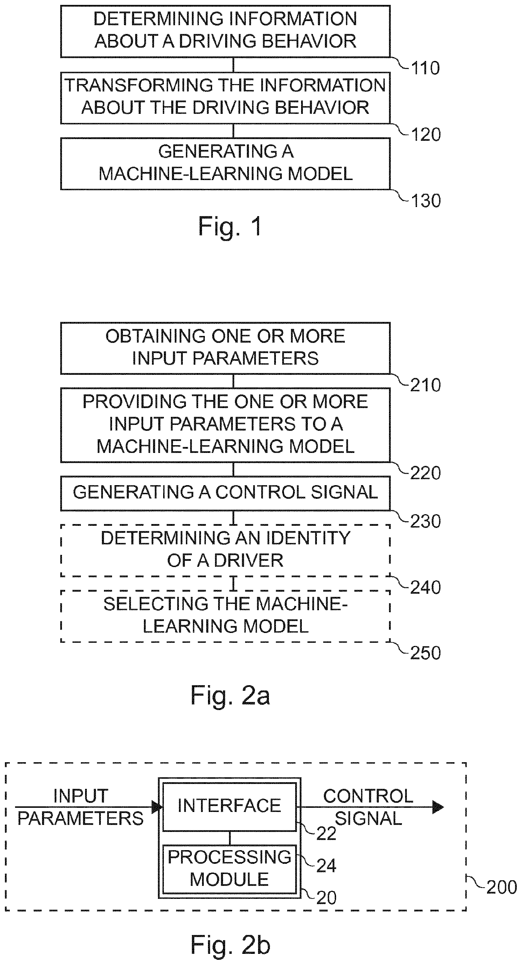

Fig. 1 shows a flow chart of an embodiment of a (computer-implemented) method for generating a machine-learning model for operating a vehicle. The method comprises determining 110 information about a driving behavior of a driver of the vehicle. The method comprises transforming 120 the information about the driving behavior of the driver of the vehicle into a target function for the machine-learning model. The method comprises generating 130 (i.e. training and/or creating) the machine-learning model. The machine-learning model is trained using an imitation learning approach that is based on the target function, to obtain a machine-learning model that imitates the driving behavior of the driver of the vehicle.

Embodiments provide a method for generating a machine-learning model that is suitable for operating a vehicle. Contrary to some previous attempts at training machine-learning models to be used for operating a vehicle, the machine-learning model being generated in the present disclosure is being trained with a focus on the driver. To achieve this, a so-called "target function" of the training of the machine-learning model is determined based on the driving behavior of the driver, and used in an imitation learning-based training of the machine-learning model. Therefore, the machine-learning model is tailored to the driving behavior of the driver. In case the vehicle is shared among drivers, each driver may have his or her own machine-learning model that is specific to that driver.

Embodiments employ a technique called "imitation learning" to generate the machine-learning model. In general, machine learning refers to algorithms and statistical models that computer systems may use to perform a specific task without using explicit instructions, instead relying on models and inference. For example, in machine-learning, instead of a rule-based transformation of data, a transformation of data may be used, that is inferred from an analysis of historical and/or training data. For example, the content of images may be analyzed using a machine-learning model or using a machine-learning algorithm. In order for the machine-learning model to analyze the content of an image, the machine-learning model may be trained using training images as input and training content information as output. By training the machine-learning model with a large number of training images and associated training content information, the machine-learning model "learns" to recognize the content of the images, so the content of images that are not included of the training images can be recognized using the machine-learning model. The same principle may be used for other kinds of sensor data as well: By training a machine-learning model using training sensor data and a desired output, the machine-learning model "learns" a transformation between the sensor data and the output, which can be used to provide an output based on non-training sensor data provided to the machine-learning model.

Machine-learning models are trained using training input data. The examples specified above use a training method called "supervised learning". In supervised learning, the machine-learning model is trained using a plurality of training samples, wherein each sample may comprise a plurality of input data values, and a plurality of desired output values, i.e. each training sample is associated with a desired output value. By specifying both training samples and desired output values, the machine-learning model "learns" which output value to provide based on an input sample that is similar to the samples provided during the training. Apart from supervised learning, semi-supervised learning may be used. In semi-supervised learning, some of the training samples lack a corresponding desired output value. Supervised learning may be based on a supervised learning algorithm, e.g. a classification algorithm, a regression algorithm or a similarity learning algorithm. Apart from supervised or semi-supervised learning, unsupervised learning may be used to train the machine-learning model. In unsupervised learning, (only) input data might be supplied, and an unsupervised learning algorithm may be used to find structure in the input data, e.g. by grouping or clustering the input data, finding commonalities in the data. Reinforcement learning is a third group of machine-learning algorithms.

To be able to train the machine-learning model using imitation learning, first, the information about the driving behavior of the driver may be gathered. In this context, the information about the driving behavior may model the driving behavior of the driver, e.g. using a quantization of one or more aspects of the driving behavior of the driver. For example, the information about the driving behavior of the driver of the vehicle may comprise information on one or more elements of the group of a following distance of the driver (i.e. a minimal, maximal and/or average following distance), a lane changing behavior of the driver, a preferred position of the driver within a lane, a desired velocity of the driver within bends, a behavior of the driver in wait or drive situations, an overtaking behavior of the driver, a steering behavior of the driver, an acceleration behavior of the driver and a deceleration behavior of the driver. One or more of the above aspects may make up the one or more aspects of the driving behavior of the driver. The method may further comprise obtaining sensor data of one or more sensors or devices of the vehicle (i.e. accelerometer, speedometer, steering angle sensor etc., processing module). The information about the driving behavior may be determined based on the sensor data of the one or more sensors or devices of the vehicle. For example, the information about the driving behavior may be determined about a driving behavior of the driver of the vehicle while the driver of the vehicle operates the vehicle in a manual driving mode.

For example, the lane-changing behavior of the driver may refer to the likeliness of the driver to perform a lane change. The lane-changing behavior may model the conditions that are required for a driver to decide whether to change the lane (such as a distance and/or velocity of preceding or succeeding vehicles). Similarly, the overtaking behavior of the driver may model the conditions that are required for a driver to decide whether to overtake a preceding vehicle, e.g. based on a distance and velocity relative to the preceding vehicle and/or based on a distance and relative velocity of succeeding vehicle(s). The steering behavior of the driver may model at least one of a steering torque and a steering angle, i.e. how steep the angle is that the driver uses when changing lanes. The acceleration behavior of the driver may model a minimal, average and/or maximal acceleration force and/or jerk (derivative of the acceleration) (or equivalent) the driver uses when performing driving maneuvers. The deceleration behavior of the vehicle may model a minimal, average and/or maximal deceleration force (or equivalent) the driver uses when performing driving maneuvers. The preferred position of the driver within a lane may model whether the driver prefers to drive in the center or with an offset to the left or to the right within a lane. The desired velocity of the driver within bends may model whether the driver prefers to use a higher velocity (incurring higher centrifugal forces) or a lower velocity (losing velocity) in bends. The behavior of the driver in wait or drive situations may model whether the driver prefers to passively wait in wait and drive situations (such as in a narrow road) or whether the driver prefers to actively take initiative in wait and drive situations.

The method comprises transforming 120 the information about the driving behavior of the driver of the vehicle into a target function for the machine-learning model. In general, the target function represents the driving behavior of the driver of the vehicle. The target function may be a reference value that is suitable for use in the generation of the machine-learning model, to provide a basis for a comparison between a driving behavior of the machine-learning model and the driving behavior of the driver of the vehicle.

In some embodiments, reinforcement learning may be used in the generation 130 of the machine-learning model. In other words, the machine-learning model may be generated 130 using reinforcement learning. In reinforcement learning, one or more software actors (called "software agents") are trained to take actions in an environment. Based on the taken actions, a reward is calculated according to a reward function. The actions are based on a policy, a policy being a function that returns an action for a given state. Reinforcement learning is based on training the one or more software agents to choose the actions such that the cumulative reward is increased, leading to software agents that become better at the task they are given (as evidenced by the increasing rewards). The reward function is used to calculate the cumulative reward, e.g. the reward that is gained based on all of the actions taken by the one or more software agents. For example, the reward of an action may be positive, e.g. if a rule of the reward function is fulfilled in a favorable manner, or negative (or less positive), if a rule of the reward function is violated. The reinforcement learning may be based on a simulation of the vehicle in a vehicular environment. Accordingly, the one or more software agents may model the behavior of the vehicle in the vehicular environment (during the simulation). The one or more software agents may control vehicular functions in the simulation of the vehicle, such as a lane-changing behavior of the vehicle, a preferred position of the driver within a lane, a desired velocity of the driver within bends, a behavior of the driver in wait or drive situations, an overtaking behavior of the vehicle, a steering behavior of the vehicle, an acceleration behavior of the vehicle and/or a deceleration behavior of the vehicle. The one or more software agents may thus model the autonomous driving of the vehicle. The target function may be the reward function of the reinforcement learning-based training/generation of the machine-learning model. The reward function may be based on a difference between the driving behavior of the driver and a simulated driving behavior of the vehicle. The reward function may provide a higher reward if the difference between the driving behavior of the driver and the simulated driving behavior of the vehicle is smaller, and a smaller reward if the difference between the driving behavior of the driver and the simulated driving behavior of the vehicle is larger.

The transforming 120 of the information about the driving behavior of the driver of the vehicle into the target function for the machine-learning model may comprise using inverse reinforcement learning based on the driving behavior of the driver to determine the reward function. In inverse reinforcement learning, a known policy is used to derive the target function. In this case, the known policy may be (or may be based on) the driving behavior of the driver of the vehicle. In other words, the method may comprise transforming the driving behavior into a policy for the inverse reinforcement learning-based transformation of the information about the driving behavior of the driver of the vehicle into the target function for the machine-learning model. The method may comprise using the policy to derive the reward function. Subsequently, the derived reward function may be used to train the machine-learning model using reinforcement learning.

Alternatively, the machine-learning model may be generated using a generative adversarial imitation learning (GAIL)-based approach. In generative adversarial imitation learning, two actors are pitted against each other, a generator component and a discriminator component. The role of the generator component is to generate a plurality of variants of an action, and the rule of the discriminator component is to evaluate the plurality of variants. In other words, the generator components generates the plurality of variants of an action for given states, which are subsequently simulated by a simulator, and the simulator simulates what happens when these actions are taken in the given states and returns the next states. In the evaluation of the plurality of variants, the discriminator component attempts to distinguish between the generated variants and a reference, to judge whether the generated variants are indistinguishable from the reference. In generative adversarial imitation learning, the generator component may adjust the plurality of variants to cause the discriminator component to recognize as many variants as possible as genuine (and not as generated by the generator component). This principle can be applied to the above setting. For example, the machine-learning model may be generated using a simulation of the vehicle in a vehicular environment using a generator component and a discriminator component. The generator component may generate a plurality of variants of a driving behavior of the vehicle. The discriminator component may evaluate the plurality of variants of the driving behavior of the vehicle based on the driving behavior of the driver (i.e. using the target function). In this case, the transforming 120 of the information about the driving behavior of the driver of the vehicle into the target function for the machine-learning model may comprise configuring the discriminator component based on the driving behavior of the driver. In other words, the target function may be implemented by the discriminator component. The generator component may generate the plurality of variants of a driving behavior of the vehicle to cause the discriminator component to recognize as many variants as possible as reflecting the driving behavior of the driver of the vehicle (and not as generated by the generator component).

The method comprises generating 130 the machine-learning model. The machine-learning model is trained using an imitation learning approach that is based on the target function (e.g. as reward function or discriminator component), (in order or with the goal) to obtain a machine-learning model that imitates the driving behavior of the driver of the vehicle. In other words, the machine-learning model is a machine-learning model that imitates the driving behavior of the driver of the vehicle. For example, the machine-learning network may be generated using a processing module of the vehicle. Alternatively, the machine-learning network may be generated using a datacenter.

In general, the machine-learning model may be generated 130 using the simulation of the vehicle in the vehicular environment. The imitation learning approach may be aimed at decreasing a difference between the driving behavior of the driver and a simulated driving behavior of the vehicle. In other words, the imitation learning approach may be used to decrease the difference between the driving behavior of the driver and a simulated driving behavior of the vehicle during the training of the machine-learning model. The generation 130 of the machine-learning model may use the imitation learning approach to decrease the difference between the driving behavior of the driver and a simulated driving behavior of the vehicle When using reinforcement learning, in the simulation of the vehicle, the one or more software agents may be tasked with reaching a high cumulative reward (based on the reward function) in various driving situations. In other words, the machine-learning model may be exposed to a plurality of driving situations. In each driving situation, reinforcement learning may be used to determine an optimal approach to handling the driving situation, e.g. by simulating different approaches to handling the driving situations. The one or more software agents may be configured to control the lane-changing behavior of the vehicle, the preferred position of the driver within a lane, the desired velocity of the driver within bends, the behavior of the driver in wait or drive situations, the overtaking behavior of the vehicle, the steering behavior of the vehicle, the acceleration behavior of the vehicle and/or the deceleration behavior of the vehicle, to generate the different approaches to handling the driving situations.

Alternatively, generative adversarial imitation learning may be used. In this case, the generator component may be tasked to generate the plurality of variants to cope with the various driving situations. Again, the machine-learning model may be exposed to a plurality of driving situations. The generator component may be configured to control the lane-changing behavior of the vehicle, the preferred position of the driver within a lane, the desired velocity of the driver within bends, the behavior of the driver in wait or drive situations, the overtaking behavior of the vehicle, the steering behavior of the vehicle, the acceleration behavior of the vehicle and/or the deceleration behavior of the vehicle, to generate the different approaches to handling the driving situations.

Accordingly, the machine-learning model may be suitable for controlling at least one of the lane-changing behavior of the vehicle, the preferred position of the driver within a lane, the desired velocity of the driver within bends, the behavior of the driver in wait or drive situations, the overtaking behavior of the vehicle, the steering behavior of the vehicle, the acceleration behavior of the vehicle and/or the deceleration behavior of the vehicle. For example, the machine-learning model may be suitable for setting parameters concerning driving policy. The one or more software agents or the generator component may operate (i.e. steer) the vehicle in the various driving situations.

To model the driving situation, simulated input parameters may be provided to the machine. In other words, the simulation of the vehicle in the vehicular environment may be based on one or more simulated input parameters related to the vehicular environment of the vehicle. The one or more simulated input parameters may reflect a driving situation the vehicle is in. In some embodiments, the one or more simulated input parameters are low-level input parameters, such as simulated sensor data of image sensors or of lidar sensors of the vehicle. In other words, the one or more simulated input parameters may comprise simulated sensor data of perception sensors (such as camera sensors, lidar sensors or ultrasound sensors) of the vehicle. In this case, the one or more software agents or the generator component may be tasked with determining how to operate the vehicle in the driving situation based on the simulated sensor data of the perception sensors of the vehicle.

Alternatively or additionally, a higher-level simulation may be performed, e.g. by not providing the sensor data, but by abstracting from the sensor data to obtain the relevant parameters, such as distances between vehicles, position on the road etc. Accordingly, the one or more simulated input parameters may comprise one or more elements of simulated positional data of the vehicle and of one or more further vehicles surrounding the vehicle, simulated velocity data of the vehicle and of one or more further vehicles surrounding the vehicle, and static mapping data of features of the environment of the vehicle. This information may reflect the driving situation the vehicle is in, e.g. by modeling a position of the vehicle relative to surrounding vehicles and/or relative to features (such as the road, infrastructure) of the environment of the vehicle. Based on the one or more simulated input parameters, the one or more software agents or the generator component may determine an improved (e.g. an optimal) approach to the driving situation.

The machine-learning model is generated based on a pre-trained machine-learning model. The pre-trained machine-learning model is e a driver-agnostic machine-learning model, i.e. a machine-learning model that is not specific to a driving behavior of a single driver. In some embodiments, the pre-trained machine-learning model may be pre-trained using reinforcement learning. Alternatively, the pre-trained machine-learning model may be pre-trained using supervised learning. The pre-trained machine-learning model may be adjusted in the generation of the machine-learning model to imitate one or more elements of the group of the following distance of the driver, the lane changing behavior of the driver, the preferred position of the driver within a lane, the desired velocity of the driver within bends, the behavior of the driver in wait or drive situations, the overtaking behavior of the driver, the steering behavior of the driver, the acceleration behavior of the driver and the deceleration behavior of the driver.

In some embodiments, an amount of change relative to the pre-trained machine-learning model may be limited in the generation of the machine-learning model, e.g. to avoid generating a machine-learning model that drives unpredictably. For example, this may be achieved by using reinforcement learning both for the pre-trained machine-learning model and for the generation of the machine-learning model. In this case, a reward function of the pre-trained machine-learning model may be used in combination with the reward function that is generated based on the driving behavior of the driver of the vehicle. In other words, the pre-trained machine-learning model may be a machine-learning model that is trained using reinforcement learning using a further reward function. The machine-learning model may be generated using reinforcement learning using a combination of the target function and of the further reward function as reward function.

Machine-learning algorithms are usually based on a machine-learning model. In other words, the term "machine-learning algorithm" may denote a set of instructions that may be used to create, train or use a machine-learning model. The term "machine-learning model" may denote a data structure and/or set of rules that represents the learned knowledge, e.g. based on the training performed by the machine-learning algorithm. In embodiments, the usage of a machine-learning algorithm may imply the usage of an underlying machine-learning model (or of a plurality of underlying machine-learning models). The usage of a machine-learning model may imply that the machine-learning model and/or the data structure/set of rules that is the machine-learning model is trained by a machine-learning algorithm.

The machine-learning model is an artificial neural network (ANN). ANNs are systems that are inspired by biological neural networks, such as can be found in a brain. ANNs comprise a plurality of interconnected nodes and a plurality of connections, so-called edges, between the nodes. There are usually three types of nodes, input nodes that receiving input values, hidden nodes that are (only) connected to other nodes, and output nodes that provide output values. Each node may represent an artificial neuron. Each edge may transmit information, from one node to another. The output of a node may be defined as a (non-linear) function of the sum of its inputs. The inputs of a node may be used in the function based on a "weight" of the edge or of the node that provides the input. The weight of nodes and/or of edges may be adjusted in the learning process. In other words, the training of an artificial neural network may comprise adjusting the weights of the nodes and/or edges of the artificial neural network, i.e. to achieve a desired output for a given input.

In the following, a further method, apparatus and computer program is shown. This method, apparatus and computer program apply the machine-learning model generated above in the actual operation of a vehicle.

Fig. 2a shows a flow chart of an embodiment of a (computer-implemented) method for generating a control signal for operating a vehicle. The method comprises obtaining 210 one or more input parameters from one or more input sources. The method comprises providing 220 the one or more input parameters to a machine-learning model to obtain one or more output values. The machine-learning model is trained using an imitation learning approach that is based on a target function that is based on information about a driving behavior of a driver of the vehicle. The machine-learning model is trained to imitate the driving behavior of the driver of the vehicle. For example, the machine-learning model may be the machine-learning network generated by the method of Fig. 1. The one or more input parameters reflect a driving situation the vehicle is in. The one or more output values indicate a driving maneuver to be carried out by the vehicle in response to the driving situation. The method comprises generating 230 a control signal based on the one or more output values, the control signal being suitable operating the vehicle. For example, the method may be executed by the vehicle, e.g. by a processing module of the vehicle.

Fig. 2b shows a block diagram of an embodiment of a (corresponding) apparatus 20 for generating a control signal for operating a vehicle 200. The apparatus 20 comprises at least one interface 22 for obtaining one or more input parameters from one or more input sources. The apparatus 20 further comprises a processing module 24 that is coupled to the at least one interface 22. The processing module 24 may be configured to execute the method of Fig. 2a, e.g. in conjunction with the at least one interface 22. For example, the processing module 24 is configured to provide the one or more input parameters to a machine-learning model to obtain one or more output values. The processing module 24 is further configured to generate the control signal based on the one or more output values. Fig. 2b further shows the vehicle 200 comprising the apparatus 20.

The method, apparatus and computer program for generating the control signal for operating the vehicle 200 is targeted at the vehicle 200, e.g. by specifying how the machine-learning model generated by the method or computer program of Fig. 1 may be used in the vehicle 200. Accordingly, the machine-learning model may correspond to the reinforcement learning-based machine-learning model introduced in connection with Fig. 1. The machine-learning model is used to generate the one or more output values based on the one or more input parameters. The output values are in turn used to generate the control signal, which is suitable for operating the vehicle. In this context, the term "operating the vehicle" may correspond to steering the vehicle, but may also correspond to "controlling parameters of certain actions and/or certain maneuvers of the vehicle". In other words, the control signal may be suitable for controlling parameters of one or more actions and/or one or more driving maneuvers of the vehicle, such as an acceleration, a deceleration, a lane change maneuver or an overtaking maneuver. Accordingly, the one or more output values may comprise information on parameters of one or more actions and/or one or more driving maneuvers of the vehicle to be taken in response to the one or more input parameters.

In the description of the method of Fig. 1, simulated input parameters were used in the simulation of the vehicle during the reinforcement learning process. The one or more input parameters used in the present method, apparatus and/or computer programs correspond to these simulated input parameters. Accordingly, the plurality of input parameters may comprise sensor data of perception sensors (such as a camera, a lidar sensor or an ultrasound sensor) of the vehicle. Additionally or alternatively, the plurality of input parameters may comprise one or more elements of positional data of the vehicle and of one or more further vehicles surrounding the vehicle, velocity data of the vehicle and of one or more further vehicles surrounding the vehicle, and static mapping data of features of the environment of the vehicle. For example, the method may comprise obtaining the one or more input parameters from one or more sensors or devices of the vehicle (e.g. from one or more perception sensors or from an autonomous driving system of the vehicle).

The method introduced in connection with Fig. 1 is directed at generating machine-learning model that imitates the driving behavior of a (single) driver of the vehicle. In case the vehicle is shared among multiple drivers, each driver may use a different machine-learning model that imitates the driving behavior of the respective driver. Accordingly, a plurality of driver-specific machine-learning models may be stored by a storage module of the vehicle. The machine-learning model may be one of the plurality of driver-specific machine-learning models. The method may comprise selecting 250 the machine-learning model based an identity of a driver using the vehicle.

To be able to select the appropriate machine-learning model, the identity of the driver of the vehicle may be determined. This may be based on various identifiers of the driver of the vehicle, e.g. a driving profile chosen by the driver, a (personal) key fob of the driver or a cell phone of the driver. In other words, the method may further comprise determining 240 the identity of the driver using the vehicle using one or more elements of the group of a selection of a profile by the driver, a detection of a personal key fob of the driver and a detection of a cell phone or wearable device of the driver. In this context, the "identity of the driver" may indicate merely an identifier that is suitable for distinguishing different drivers, which need not necessarily the name of the respective driver. For example, each driver may have an own profile when using the car, e.g. to set seat and mirror positions, favorite radio stations etc. Based on the selection of such a profile, the identity of the driver may be determined. Alternatively or additionally, each driver may have a personal key fob that is specific to the driver, which may be used to identify the driver. Alternatively or additionally, the cell phone (e.g. smartphone) or wearable device (e.g. smart watch) of the driver may be used, e.g. if it is connected to the vehicle using WiFi or Bluetooth.

The at least one interface 22 may correspond to one or more inputs and/or outputs for receiving and/or transmitting information, which may be in digital (bit) values according to a specified code, within a module, between modules or between modules of different entities. For example, the at least one interface 22 may comprise interface circuitry configured to receive and/or transmit information.

In embodiments the processing module 24 may be implemented using one or more processing units, one or more processing devices, any means for processing, such as a processor, a computer or a programmable hardware component being operable with accordingly adapted software. In other words, the described function of the processing module 24 may as well be implemented in software, which is then executed on one or more programmable hardware components. Such hardware components may comprise a general purpose processor, a Digital Signal Processor (DSP), a micro-controller, etc.

More details and aspects of the method or apparatus are mentioned in connection with the proposed concept or one or more examples described above (e.g. Fig. 1). The method may comprise one or more additional optional features corresponding to one or more aspects of the proposed concept or one or more examples described above or below.

The aspects and features mentioned and described together with one or more of the previously detailed examples and figures, may as well be combined with one or more of the other examples in order to replace a like feature of the other example or in order to additionally introduce the feature to the other example.

Examples may further be or relate to a computer program having a program code for performing one or more of the above methods, when the computer program is executed on a computer or processor. Steps, operations or processes of various above-described methods may be performed by programmed computers or processors. Examples may also cover program storage devices such as digital data storage media, which are machine, processor or computer readable and encode machine-executable, processor-executable or computer-executable programs of instructions. The instructions perform or cause performing some or all of the acts of the above-described methods. The program storage devices may comprise or be, for instance, digital memories, magnetic storage media such as magnetic disks and magnetic tapes, hard drives, or optically readable digital data storage media. Further examples may also cover computers, processors or control units programmed to perform the acts of the above-described methods or (field) programmable logic arrays ((F)PLAs) or (field) programmable gate arrays ((F)PGAs), programmed to perform the acts of the above-described methods.

## Claims

1. A method for operating a vehicle, the method comprising:
Obtaining (210) one or more input parameters from one or more input sources;
Providing (220) the one or more input parameters to a machine-learning model to obtain one or more output values,
wherein the machine-learning model is an artificial neural network that is generated based on a pre-trained machine-learning model, the pre-trained machine-learning model being a driver-agnostic machine-learning model, and trained using an imitation learning approach that is based on a target function that is based on information about a driving behavior of a driver of the vehicle, wherein the machine-learning model is trained to imitate the driving behavior of the driver of the vehicle,
wherein the one or more input parameters reflect a driving situation the vehicle is in and wherein the one or more output values indicate a driving maneuver to be carried out by the vehicle in response to the driving situation; and
Generating (230) the control signal based on the one or more output values.

2. The method according to claim 1, wherein the machine-learning model is one of a plurality of driver-specific machine-learning models, wherein the method comprises selecting (250) the machine-learning model based an identity of a driver using the vehicle.

3. The method according to claim 2, the method further comprising determining (240) the identity of the driver using the vehicle using one or more elements of the group of a selection of a profile by the driver, a detection of a personal key fob of the driver and a detection of a cell phone of the driver.

4. The method according to one of the claims 1 to 3, wherein the machine-learning model is generated using a simulation of the vehicle in a vehicular environment, wherein the imitation learning approach is aimed at decreasing a difference between the driving behavior of the driver and a simulated driving behavior of the vehicle.

5. The method according to claim 4, wherein the simulation of the vehicle in the vehicular environment is based on one or more simulated input parameters related to the vehicular environment of the vehicle, wherein the one or more simulated input parameters reflect a driving situation the vehicle is in.

6. The method according to claim 5, wherein the plurality of simulated input parameters comprise simulated sensor data of perception sensors of the vehicle,
or wherein the plurality of simulated input parameters comprise one or more elements of simulated positional data of the vehicle and of one or more further vehicles surrounding the vehicle, simulated velocity data of the vehicle and of one or more further vehicles surrounding the vehicle, and static mapping data of features of the environment of the vehicle.

7. The method according to one of the claims 1 to 6, wherein the machine-learning model is generated using reinforcement learning.

8. The method according to claim 7, wherein the target function is a reward function of the reinforcement learning-based generation of the machine-learning model, wherein the information about the driving behavior of the driver of the vehicle is transformed into the target function for the machine-learning model using inverse reinforcement learning based on the driving behavior of the driver to determine the reward function.

9. The method according to claim 8, wherein the reinforcement learning is based on a simulation of the vehicle in a vehicular environment, wherein the reward function is based on a difference between the driving behavior of the driver and a simulated driving behavior of the vehicle.

10. The method according to one of the claims 1 to 9, wherein the machine-learning model is generated using a generative adversarial imitation learning-based approach.

11. The method according to claim 8, wherein the machine-learning model is generated using a simulation of the vehicle in a vehicular environment using a generator component and a discriminator component, the generator component generating a plurality of variants of a driving behavior of the vehicle, the discriminator component evaluating the plurality of variants of the driving behavior of the vehicle based on the driving behavior of the driver.

12. The method according to one of the claims 1 to 11, wherein an amount of change relative to the pre-trained machine-learning model is limited in the generation of the machine-learning model.

13. The method according to one of the claims 1 to 12, wherein the pre-trained machine-learning model is a machine-learning model that is trained using reinforcement learning using a further reward function, wherein the machine-learning model is generated using reinforcement learning using a combination of the target function and of the further reward function as reward function.

14. The method according to claim 13, wherein the information about the driving behavior of the driver of the vehicle comprises information on one or more elements of the group of a following distance of the driver, a lane changing behavior of the driver, a preferred position of the driver within a lane, a desired velocity of the driver within bends, a behavior of the driver in wait or drive situations, an overtaking behavior of the driver, a steering behavior of the driver, an acceleration behavior of the driver and a deceleration behavior of the driver,
wherein the pre-trained machine-learning model is adjusted in the generation of the machine-learning model to imitate one or more elements of the group of the following distance of the driver, the lane changing behavior of the driver, the preferred position of the driver within a lane, the desired velocity of the driver within bends, the behavior of the driver in wait or drive situations, the overtaking behavior of the driver, the steering behavior of the driver, the acceleration behavior of the driver and the deceleration behavior of the driver.

15. A computer program having a program code for performing the method according to one of the previous claims, when the computer program is executed on a computer, a processor, or a programmable hardware component.

16. An apparatus (20) for operating a vehicle (200), the apparatus comprising:
at least one interface (22) for obtaining one or more input parameters from one or more input sources; and
a processing module (24) configured to:
Provide the one or more input parameters to a machine-learning model to obtain one or more output values,
wherein the machine-learning model is an artificial neural network that is generated based on a pre-trained machine-learning model, the pre-trained machine-learning model being a driver-agnostic machine-learning model, and trained using an imitation learning approach that is based on a target function that is based on information about a driving behavior of a driver of the vehicle, wherein the machine-learning model is trained to imitate the driving behavior of the driver of the vehicle,
wherein the one or more input parameters reflect a driving situation the vehicle is in and wherein the one or more output values indicate a driving maneuver to be carried out by the vehicle in response to the driving situation, and
Generate the control signal based on the one or more output values.

## Patentansprüche

1. Verfahren zum Betreiben eines Fahrzeugs, wobei das Verfahren umfasst:
Erhalten (210) eines oder mehrerer Eingabeparameter aus einer oder mehreren Eingangsquellen;
Bereitstellen (220) des einen oder der mehreren Eingabeparameter für ein maschinelles Lernmodell, um einen oder mehrere Ausgabewerte zu erhalten,
wobei das maschinelle Lernmodell ein künstliches neuronales Netzwerk ist, das basierend auf einem vortrainierten maschinellen Lernmodells erzeugt wird, wobei das vortrainierte maschinelle Lernmodell ein fahrerunabhängiges maschinelles Lernmodell ist, und das unter Verwendung eines Imitationslernansatzes trainiert wird, der auf einer Zielfunktion basiert, die auf Informationen über ein Fahrverhalten eines Fahrers des Fahrzeugs basiert, wobei das maschinelle Lernmodell trainiert ist, das Fahrverhalten des Fahrers des Fahrzeugs zu imitieren,
wobei der eine oder die mehreren Eingangsparameter eine Fahrsituation widerspiegeln, in der sich das Fahrzeug befindet, und wobei der eine oder die mehreren Ausgabewerte ein Fahrmanöver angeben, das von dem Fahrzeug als Reaktion auf die Fahrsituation durchzuführen ist; und
Erzeugen (230) des Steuersignals basierend auf dem einen oder den mehreren Ausgabewerten.

2. Verfahren nach Anspruch 1, wobei das maschinelle Lernmodell eines von mehreren fahrerspezifischen maschinellen Lernmodellen ist, wobei das Verfahren Auswählen (250) des maschinellen Lernmodells basierend auf einer Identität eines Fahrers, der das Fahrzeug benutzt, umfasst.

3. Verfahren nach Anspruch 2, wobei das Verfahren ferner Bestimmen (240) der Identität des Fahrers, der das Fahrzeug benutzt, unter Verwendung eines oder mehrerer Elemente aus der Gruppe einer Auswahl eines Profils durch den Fahrer, einer Erkennung eines persönlichen Schlüsselanhängers des Fahrers und einer Erkennung eines Mobiltelefons des Fahrers umfasst.

4. Verfahren nach einem der Ansprüche 1 bis 3, wobei das maschinelle Lernmodell unter Verwendung einer Simulation des Fahrzeugs in einer Fahrzeugumgebung erzeugt wird, wobei der Ansatz des Nachahmungslernens darauf abzielt, einen Unterschied zwischen dem Fahrverhalten des Fahrers und einem simulierten Fahrverhalten des Fahrzeugs zu verringern.

5. Verfahren nach Anspruch 4, wobei die Simulation des Fahrzeugs in der Fahrzeugumgebung auf einem oder mehreren simulierten Eingangsparametern basiert, die sich auf die Fahrzeugumgebung des Fahrzeugs beziehen, wobei der eine oder die mehreren simulierten Eingangsparameter eine Fahrsituation widerspiegeln, in der sich das Fahrzeug befindet.

6. Verfahren nach Anspruch 5, wobei die Vielzahl von simulierten Eingangsparametern simulierte Sensordaten von Wahrnehmungssensoren des Fahrzeugs umfassen,
oder wobei die Vielzahl von simulierten Eingangsparametern ein oder mehrere Elemente von simulierten Positionsdaten des Fahrzeugs und von einem oder mehreren weiteren das Fahrzeug umgebenden Fahrzeugen, simulierte Geschwindigkeitsdaten des Fahrzeugs und von einem oder mehreren weiteren das Fahrzeug umgebenden Fahrzeugen und statische Kartendaten von Merkmalen der Umgebung des Fahrzeugs umfassen.

7. Verfahren nach einem der Ansprüche 1 bis 6, wobei das maschinelle Lernmodell unter Verwendung von Reinforcement-Learning erzeugt wird.

8. Verfahren nach Anspruch 7, wobei die Zielfunktion eine Belohnungsfunktion der auf Reinforcement-Learning-basierenden Erzeugung des maschinellen Lernmodells ist, wobei die Information über das Fahrverhalten des Fahrers des Fahrzeugs unter Verwendung von inversem Reinforcement-Learning basierend auf dem Fahrverhaltens des Fahrers in die Zielfunktion für das maschinelle Lernmodell umgewandelt wird, um die Belohnungsfunktion zu bestimmen.

9. Verfahren nach Anspruch 8, wobei das Reinforcement-Learning auf einer Simulation des Fahrzeugs in einer Fahrzeugumgebung basiert, wobei die Belohnungsfunktion auf einer Differenz zwischen dem Fahrverhalten des Fahrers und einem simulierten Fahrverhalten des Fahrzeugs basiert.

10. Verfahren nach einem der Ansprüche 1 bis 9, wobei das maschinelle Lernmodell unter Verwendung eines Ansatzes basierend auf erzeugendem kontradiktorischem Imitationslernen erzeugt wird.

11. Verfahren nach Anspruch 8, wobei das maschinelle Lernmodell unter Verwendung einer Simulation des Fahrzeugs in einer Fahrzeugumgebung unter Verwendung einer Generatorkomponente und einer Diskriminatorkomponente erzeugt wird, wobei die Generatorkomponente eine Vielzahl von Varianten eines Fahrverhaltens des Fahrzeugs erzeugt, wobei die Diskriminatorkomponente die Vielzahl von Varianten des Fahrverhaltens des Fahrzeugs basierend auf dem Fahrverhalten des Fahrers bewertet.

12. Verfahren nach einem der Ansprüche 1 bis 11, wobei der Umfang der Änderung gegenüber dem vortrainierten maschinellen Lernmodell bei der Erzeugung des maschinellen Lernmodells begrenzt ist.

13. Verfahren nach einem der Ansprüche 1 bis 12, wobei das vortrainierte maschinelle Lernmodell ein maschinelles Lernmodell ist, das unter Verwendung von Reinforcement Learning unter Verwendung einer weiteren Belohnungsfunktion trainiert wird, wobei das maschinelle Lernmodell unter Verwendung von Reinforcement Learning unter Verwendung einer Kombination aus der Zielfunktion und der weiteren Belohnungsfunktion als Belohnungsfunktion erzeugt wird.

14. Verfahren nach Anspruch 13, wobei die Information über das Fahrverhalten des Fahrers des Fahrzeugs Informationen über ein oder mehrere Elemente der Gruppe eines Folgeabstands des Fahrers, eines Spurwechselverhaltens des Fahrers, einer bevorzugten Position des Fahrers innerhalb einer Fahrspur, einer gewünschten Geschwindigkeit des Fahrers in Kurven, eines Verhaltens des Fahrers in Warte- oder Fahrsituationen, eines Überholverhaltens des Fahrers, eines Lenkverhaltens des Fahrers, eines Beschleunigungsverhaltens des Fahrers und eines Verzögerungsverhaltens des Fahrers umfasst,
wobei das vortrainierte maschinelle Lernmodell bei der Erzeugung des maschinellen Lernmodells angepasst wird, um eines oder mehrere Elemente der Gruppe des Folgeabstands des Fahrers, des Spurwechselverhaltens des Fahrers, der bevorzugte Position des Fahrers innerhalb einer Fahrspur, der gewünschten Geschwindigkeit des Fahrers in Kurven, des Verhaltens des Fahrers in Warte- oder Fahrsituationen, des Überholverhaltens des Fahrers, des Lenkverhaltens des Fahrers, des Beschleunigungsverhaltens des Fahrers und des Verzögerungsverhaltens des Fahrers zu imitieren.

15. Computerprogramm aufweisend einen Programmcode zur Durchführung des Verfahrens nach einem der vorherigen Ansprüche wenn das Computerprogramm auf einem Computer, einem Prozessor oder einer programmierbaren Hardwarekomponente ausgeführt wird.

16. Vorrichtung (20) zum Betreiben eines Fahrzeugs (200), wobei die Vorrichtung umfasst:
mindestens eine Schnittstelle (22) zum Erhalten eines oder mehrerer Eingangsparameter aus einer oder mehreren Eingangsquellen; und
ein Verarbeitungsmodul (24), das eingerichtet ist zum:
Bereitstellen des einen oder der mehreren Eingabeparameter für ein maschinelles Lernmodell, um einen oder mehrere Ausgabewerte zu erhalten,
wobei das maschinelle Lernmodell ein künstliches neuronales Netzwerk ist, das basierend auf einem vortrainierten maschinellen Lernmodells erzeugt wird, wobei das vortrainierte maschinelle Lernmodell ein fahrerunabhängiges maschinelles Lernmodell ist, und das unter Verwendung eines Imitationslernansatzes trainiert wird, der auf einer Zielfunktion basiert, die auf Informationen über ein Fahrverhalten eines Fahrers des Fahrzeugs basiert, wobei das maschinelle Lernmodell trainiert ist, das Fahrverhalten des Fahrers des Fahrzeugs zu imitieren,
wobei der eine oder die mehreren Eingangsparameter eine Fahrsituation widerspiegeln, in der sich das Fahrzeug befindet, und wobei der eine oder die mehreren Ausgabewerte ein Fahrmanöver angeben, das von dem Fahrzeug als Reaktion auf die Fahrsituation durchzuführen ist, und
Erzeugen des Steuersignals basierend auf dem einen oder den mehreren Ausgabewerte.

## Revendications

1. Procédé pour faire fonctionner un véhicule, le procédé comprenant:
obtenir (210) un ou plusieurs paramètres d'entrée à partir d'une ou de plusieurs sources d'entrée ;
fournir (220) le ou les paramètres d'entrée à un modèle d'apprentissage automatique pour obtenir une ou plusieurs valeurs de sortie,
le modèle d'apprentissage automatique étant un réseau neuronal artificiel généré sur la base d'un modèle d'apprentissage automatique pré-entraîné, le modèle d'apprentissage automatique pré-entraîné étant un modèle d'apprentissage automatique indépendant du conducteur, et entraîné selon une approche d'apprentissage par imitation basée sur une fonction cible basée sur des informations relatives au comportement de conduite d'un conducteur du véhicule, le modèle d'apprentissage automatique étant entraîné pour imiter le comportement de conduite du conducteur du véhicule,
le ou les paramètres d'entrée reflétant une situation de conduite dans laquelle se trouve le véhicule et la ou les valeurs de sortie indiquant une manoeuvre de conduite à effectuer par le véhicule en réponse à la situation de conduite ; et
générer (230) le signal de commande sur la base de la ou des valeurs de sortie.

2. Procédé selon la revendication 1, dans lequel le modèle d'apprentissage automatique est l'un d'une pluralité de modèles d'apprentissage automatique spécifiques au conducteur, le procédé comprenant sélectionner (250) le modèle d'apprentissage automatique sur la base de l'identité d'un conducteur utilisant le véhicule.

3. Procédé selon la revendication 2, le procédé comprenant en outre déterminer (240) l'identité du conducteur utilisant le véhicule à l'aide d'un ou de plusieurs éléments du groupe incluant une sélection d'un profil par le conducteur, une détection d'un porte-clés personnel du conducteur et une détection d'un téléphone portable du conducteur.

4. Procédé selon l'une des revendications 1 à 3, selon lequel le modèle d'apprentissage automatique est généré à l'aide d'une simulation du véhicule dans un environnement véhiculaire, l'approche d'apprentissage par imitation visant à réduire la différence entre le comportement de conduite du conducteur et un comportement de conduite simulé du véhicule.

5. Procédé selon la revendication 4, dans lequel la simulation du véhicule dans l'environnement du véhicule est basée sur un ou plusieurs paramètres d'entrée simulés liés à l'environnement du véhicule, le ou les paramètres d'entrée simulés reflétant une situation de conduite dans laquelle se trouve le véhicule.

6. Procédé selon la revendication 5, dans lequel la pluralité de paramètres d'entrée simulés comprend des données de capteurs simulées de capteurs de perception du véhicule,
ou dans lequel la pluralité de paramètres d'entrée simulés comprend un ou plusieurs éléments de données de position simulées du véhicule et d'un ou de plusieurs autres véhicules entourant le véhicule, des données de vitesse simulées du véhicule et d'un ou de plusieurs autres véhicules entourant le véhicule, et des données de cartographie statique des caractéristiques de l'environnement du véhicule.

7. Procédé selon l'une des revendications 1 à 6, dans lequel le modèle d'apprentissage automatique est généré à l'aide de l'apprentissage par renforcement.

8. Procédé selon la revendication 7, dans lequel la fonction cible est une fonction de récompense de la génération basée sur l'apprentissage par renforcement du modèle d'apprentissage automatique, les informations relatives au comportement de conduite du conducteur du véhicule étant transformées dans la fonction cible pour le modèle d'apprentissage automatique à l'aide d'un apprentissage par renforcement inverse basé sur le comportement de conduite du conducteur afin de déterminer la fonction de récompense.

9. Procédé selon la revendication 8, dans lequel l'apprentissage par renforcement est basé sur une simulation du véhicule dans un environnement véhiculaire, la fonction de récompense étant basée sur une différence entre le comportement de conduite du conducteur et un comportement de conduite simulé du véhicule.

10. Procédé selon l'une des revendications 1 à 9, dans lequel le modèle d'apprentissage automatique est généré à l'aide d'une approche basée sur l'apprentissage par imitation antagoniste générative.

11. Procédé selon la revendication 8, dans lequel le modèle d'apprentissage automatique est généré à l'aide d'une simulation du véhicule dans un environnement véhiculaire à l'aide d'un composant générateur et d'un composant discriminateur, le composant générateur générant une pluralité de variantes d'un comportement de conduite du véhicule, le composant discriminateur évaluant la pluralité de variantes du comportement de conduite du véhicule sur la base du comportement de conduite du conducteur.

12. Procédé selon l'une des revendications 1 à 11, dans lequel une quantité de changement par rapport au modèle d'apprentissage automatique pré-entraîné est limitée lors de la génération du modèle d'apprentissage automatique.

13. Procédé selon l'une des revendications 1 à 12, dans lequel le modèle d'apprentissage automatique pré-entraîné est un modèle d'apprentissage automatique entraîné par apprentissage par renforcement à l'aide d'une autre fonction de récompense, le modèle d'apprentissage automatique étant généré par apprentissage par renforcement en utilisant une combinaison de la fonction cible et de l'autre fonction de récompense en tant que fonction de récompense.

14. Procédé selon la revendication 13, dans lequel les informations relatives au comportement de conduite du conducteur du véhicule comprennent des informations sur un ou plusieurs éléments du groupe incluant une distance de suivi du conducteur, un comportement du conducteur lors du changement de voie, une position préférée du conducteur dans une voie, une vitesse souhaitée du conducteur dans les virages, un comportement du conducteur en situation d'attente ou de conduite, un comportement de dépassement du conducteur, un comportement de pilotage du conducteur, un comportement d'accélération du conducteur et un comportement de décélération du conducteur,
le modèle d'apprentissage automatique pré-entraîné étant ajusté lors de la génération du modèle d'apprentissage automatique pour imiter un ou plusieurs éléments du groupe de la distance de suivi du conducteur, le comportement du conducteur lors du changement de voie, la position préférée du conducteur dans une voie, la vitesse souhaitée du conducteur dans les virages, le comportement du conducteur en en situation d'attente ou de conduite, le comportement de dépassement du conducteur, le comportement de pilotage du conducteur, le comportement d'accélération du conducteur et le comportement de décélération du conducteur.

15. Un programme informatique comportant un code de programme permettant d'exécuter le procédé selon l'une des revendications précédentes, lorsque le programme informatique est exécuté sur un ordinateur, un processeur ou un composant matériel programmable.

16. Appareil (20) pour faire fonctionner un véhicule (200), l'appareil comprenant :
au moins une interface (22) pour obtenir un ou plusieurs paramètres d'entrée à partir d'une ou plusieurs sources d'entrée ; et
un module de traitement (24) configuré pour :
fournir un ou plusieurs paramètres d'entrée à un modèle d'apprentissage automatique pour obtenir une ou plusieurs valeurs de sortie,
le modèle d'apprentissage automatique étant un réseau neuronal artificiel généré sur la base d'un modèle d'apprentissage automatique pré-entraîné, le modèle d'apprentissage automatique pré-entraîné étant un modèle d'apprentissage automatique indépendant du conducteur, et entraîné selon une approche d'apprentissage par imitation basée sur une fonction cible basée sur des informations relatives au comportement de conduite d'un conducteur du véhicule, le modèle d'apprentissage automatique étant entraîné pour imiter le comportement de conduite du conducteur du véhicule,
le ou les paramètres d'entrée reflétant une situation de conduite dans laquelle se trouve le véhicule et la ou les valeurs de sortie indiquant une manoeuvre de conduite à effectuer par le véhicule en réponse à la situation de conduite, et
générer le signal de commande en fonction de la ou des valeurs de sortie.
